# EUROPEAN PATENT APPLICATION

(11) **EP 3 324 616 A1**
(43) Date of publication of application: **23.05.2018**
(21) Application number: 17184808.8
(22) Date of filing: 03.08.2017
(51) Int. Cl.: H04N 7/14

(54) **PARTITION SYSTEM**

(30) Priority: 21.11.2016 JP 2016226338
(71) Applicant: Toshiba TEC Kabushiki Kaisha, Tokyo 141-8562 (JP)
(72) Inventor: ONO, Yasuhiro, Shinagawa-ku,, Tokyo 141-8562 (JP)
(74) Representative: Takeuchi, Maya

(57) **Abstract**

According to one embodiment, there is provided a partition system including a first screen, a post that rotatably supports the first screen around a vertical axis line, and a second screen that is rotatably supported by the post around the vertical axis line.

## Description

### FIELD

Embodiments described herein relate generally to a partition system.

### BACKGROUND

There are a number of techniques describing presentation units installed in conference rooms, and it is known that some large enterprises have a plurality of shared conference rooms. However, there are cases where abutting conference rooms cannot be utilized or where a shared conference room cannot be secured when wanting to hold a conference. In some instances, a shared conference room is sufficiently wide or confidentiality is not required, depending on contents of the conference to be held or participants thereof. In such circumstances, the shared conference rooms are sometimes good enough but may not be fully utilized.

Therefore, there is a need for space that can be flexibly used at a conference in which confidentiality and breadth are not required so much and for a partition system corresponding to the space.

### DESCRIPTION OF THE DRAWINGS

FIG. 1 is an external view of a partition system according to an embodiment.
FIG. 2 is a front view of the partition system of the embodiment of Figure 1.
FIG. 3 is a top view of the partition system of the embodiment of Figure 1.
FIG. 4 is a block diagram of a system of the partition system of the embodiment of Figure 1.
FIG. 5 is a view illustrating an example of a use mode of the partition system of the embodiment of Figure 1.
FIG. 6 is a block diagram of a partition system according to one example.
FIG. 7 is a block diagram of a partition system according to another example.

### DETAILED DESCRIPTION

In general, according to one embodiment, a partition system includes a first screen; a post that rotatably supports the first screen around a vertical axis line; and a second screen that is rotatably supported by the post around the vertical axis line.

The partition system may further comprise: a third screen that is rotatably supported by the post around the vertical axis line.

The partition system may further comprise: a circular ring disposed around the post, wherein the center of the circle is coaxial with the vertical axis line.

Preferably, the ring display includes a camera that images the first screen.

Preferbaly, the ring display includes a projector that projects an image on the first screen.

In another embodiment, a partition system comprises a first screen rotatably attached to a post; a second screen rotatably attached to the post; a third screen rotatably attached to the post; and a circular ring disposed around the post, the circular ring configured to display an image on a radially outward surface thereof, the center of the circular ring being coaxial with the post.

The partition system may further comprise: one or more projectors for projecting images onto the first screen, the second scree, and the third screen.

Preferably, each of the first screen, the second screen, and the third screen includes a touch sensor on respective front and rear surfaces thereof.

The partition system may further comprise: a plurality of angle sensors for determining angular positions of the first screen, the second screen, and the third screen.

Preferably, relative angles between the first screen, the second screen, and the third screen is adjustable.

The partition system may further comprise: one or more projectors for projecting images onto the first screen, the second scree, and the third screen. Preferably, the images projected onto the first screen, the second screen, and the third screen are adjusted in response to angular positions of the first screen, the second screen, and the third screen.

In another embodiment, a partition system comprises a first screen rotatably attached to a post, the first screen including a second screen rotatably attached to the post; a third screen rotatably attached to the post; a circular ring disposed around the post, the circular ring configured to display an image on a radially outward surface thereof, the center of the circular ring being coaxial with the post; and a plurality of angle sensors for determining angular positions of the first screen, the second screen, and the third screen, wherein each of the first screen, the second screen, and the third screen includes a touch sensor on respective front and rear surfaces thereof.

Preferably, relative angles between the first screen, the second screen, and the third screen is adjustable, and wherein images projected onto the first screen, the second screen, and the third screen are adjusted in response to angular positions of the first screen, the second screen, and the third screen.

The partition system may further comprise: one or more projectors for projecting images onto the first screen, the second scree, and the third screen.

The partition system may further comprise: a camera for capturing an image of the first screen.

Hereinafter, exemplary embodiments of a partition system installed in a room will be described with reference to the drawings.

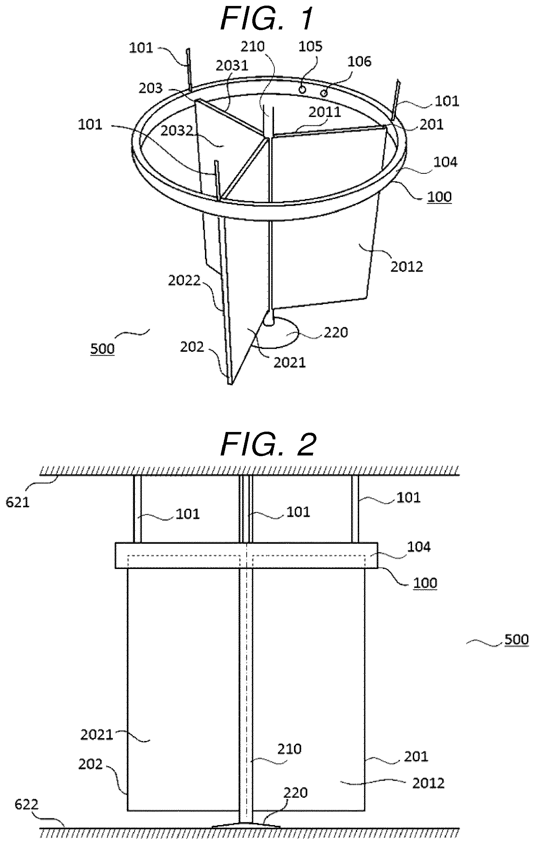

FIG. 1 is an external view of a partition system 500 according to an embodiment.

The partition system 500 includes a ring unit 100, posts 101, a ring display 104, a projector 105, a camera 106, a screen A 201, a screen B 202, a screen C 203, a rotation post 210, and a leg plate 220.

FIG. 2 is a front view of the partition system 500 as the embodiment.

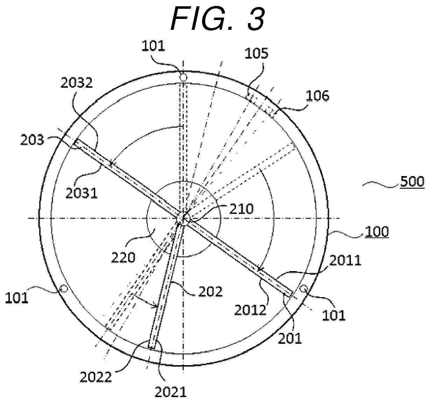

FIG. 3 is a top view of the partition system 500 of the embodiment of Figure 1.

The ring unit 100, which is suspended from a room ceiling 621 by three posts, is formed in a circular ring shape and includes the ring display 104 that displays information on an outer periphery of the circular ring, and the projector 105 and the camera 106 that are on an inner periphery of the circular ring.

The rotation post 210, which is supported by the room ceiling 621 and a room floor 622, rotatably supports one end of the screen A 201, one end of the screen B 202, and one end of the screen C 203 around the rotation post 210.

The leg plate 220 conceals a portion where the rotation post 210 and the room floor 622 are connected to each other.

The screen A 201 has a front surface 2011 and a rear surface 2012.

The screen B 202 has a front surface 2021 and a rear surface 2022.

The screen C 203 has a front surface 2031 and a rear surface 2032.

Each surface of the screen A 201, the screen B 202, and the screen C 203 is subjected to a surface treatment so that it can be handwritten or wiped off with a so-called whiteboard marker.

When viewed from above, the screen A 201, the screen B 202, and the screen C 203 are rotatable around a center of the circular ring formed by the ring unit 100. For example, the screen A 201, the screen B 202, and the screen C 203 are rotated from an angular disposition at an acute angle as indicated by broken lines in FIG. 3, as indicated by circular arc arrows so that two screens can be disposed in a parallel angular disposition as indicated by solid lines.

When viewed from above, upper portions of the screen A 201, the screen B 202, and the screen C 203 are inside the inner periphery of the circular ring of the ring unit 100. When viewed from the side, the upper portions of the screen A 201, the screen B 202, and the screen C 203 are inside the ring unit 100.

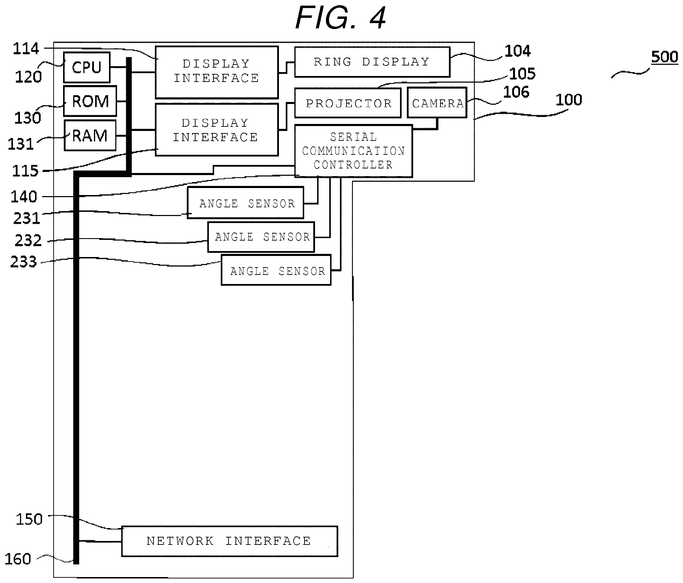

FIG. 4 is a block diagram of a partition system 500 according to one embodiment.

The partition system 500 includes the ring unit 100, the ring display 104, the projector 105, the camera 106, display interfaces 114 and 115, a CPU 120, a ROM 130, a RAM 131, a serial communication controller 140, a network interface 150, a bus 160, the screen A 201, the screen B 202, the screen C 203, and angle sensors 231, 232, and 233.

The CPU 120 which controls the whole of the partition system 500 communicates with the ROM 130 and the RAM 131 via the bus 160.

The ROM 130 stores an underlying program which is a so-called firmware to be executed by the CPU 120.

The RAM 131 has a so-called RAM disk area for storing a so-called operating system or an application program, and a working memory area for temporary storage for the CPU 120 to operate.

The display interface 114 controls the display of the ring display 104 of the ring unit 100. Information of an image displayed on the ring display 104 is stored in a video memory provided in the display interface 114. The information of the image displayed on the ring display 104 may be stored in the RAM 131.

The display interface 114 communicates with the CPU 120 via the bus 160.

The display interface 115 controls projection of the projector 105 of the ring unit 100. Information of an image projected by the projector is stored in the video memory provided in the display interface 115. The information of the image displayed on the projector 105 may be stored in the RAM 131.

The display interface 115 communicates with the CPU 120 via the bus 160.

The serial communication controller 140 communicates with the CPU 120 via the bus 160 as a so-called host bus adapter.

Information of an image imaged (e.g., captured) by the camera 106 is stored in the RAM 131 via the serial communication controller 140.

The angle sensor 231 detects an angular disposition in a coordinate system with a rotation center of the screen A 201 rotating around the rotation post 210 as an original point.

The angle sensor 232 detects an angular disposition in a coordinate system with a rotation center of the screen B 202 rotating around the rotation post 210 as an original point.

The angle sensor 233 detects an angular disposition in a coordinate system with a rotation center of the screen C 203 rotating around the rotation post 210 as an original point.

The network interface 150 is a computer network interface for connecting to the Internet or a local area network. The network interface 150 communicates with the CPU 120 via the bus 160.

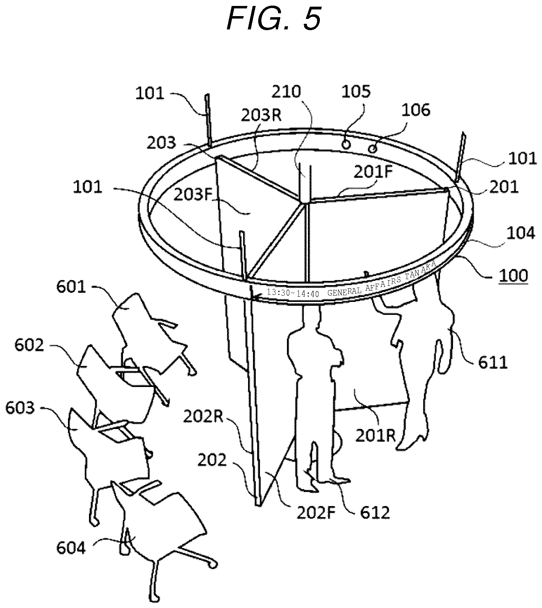

FIG. 5 is a view illustrating an example of a use mode of the partition system 500 as an embodiment.

The screen A 201, the screen B 202, and the screen C 203 serve to partition three conference spaces as partitions.

The front surface 2011 (shown in Figure 3) of the screen A 201 and the rear surface 2032 (shown in Figure 3) of the screen C 203 face the conference space on a rear side of FIG. 5.

The front surface 2021 (shown in Figure 3) of the screen B 202 and the rear surface 2012 (shown in Figure 3) of the screen A 201 face the conference space on a front side of FIG. 5.

The front surface 2031 (shown in Figure 3) of the screen C 203 and the rear surface 2022 (shown in Figure 3) of the screen B 202 face the conference space on a left side of FIG. 5.

Sizes of the three conference spaces can be changed by changing a relative angle therebetween by rotating the screen A 201, the screen B 202, and the screen C 203 relative to one another around the rotation post 210.

In addition, it is possible to change a position and a direction of the conference space according to various circumstances, such as taking into consideration influence of sunlight to be inserted into the room and taking into consideration a direction in which it is desired not to show conference contents.

Each conference space may be used in a style of standing conference such as a person 611 and a person 612 who stand in the conference space of the front side of FIG. 5. In addition, it may be used in a style of sitting on a chair 601, a chair 602, a chair 603, and a chair 604 disposed on the left side of the conference space on the left side of FIG. 5.

The ring display 104 displays an image, for example, a display indicating current use, or displays a schedule of future, or the like, on the outer periphery of the circular ring of the ring unit 100.

In the display, as illustrated in "13:30 to 14:40 General Affairs Tanaka" in FIG. 5, information of a using time zone and a user name may be included, or a conference title or the like may be included. In addition, as illustrated by the circular arc arrows along the outer periphery of the circular ring of the ring unit 100 of FIG. 3, information of an angle range of the conference space which is currently used or to be used in future may be included in the display.

When viewed from above, the screen A 201, the screen B 202, and the screen C 203 rotate around the center of the circular ring formed by the ring unit 100. Therefore, it is easy to understand a corresponding relationship between the display that is currently used, the display that has a schedule or the like to be used in future, and the conference space corresponding thereto.

When viewed from above, the upper portions of the screen A 201, the screen B 202, and the screen C 203 are inside the inner periphery of the circular ring of the ring unit 100, and when viewed from the side, the upper portions of the screen A 201, the screen B 202, and the screen C 203 are inside the ring unit 100. Therefore, it is further easy to understand the corresponding relationship between the display that is currently used, the display that has a schedule or the like to be used in future, and the conference space corresponding thereto.

The camera 106 images the front surface 2011 (shown in Figure 3) of the screen A 201 and the rear surface 2032 (shown in Figure 3) of the screen C 203 facing the conference space on the rear side of FIG. 5 from the inner periphery of the circular ring of the ring unit 100. An image obtained by being imaged (e.g., captured) is stored in the RAM 131 as an electronic file. The electronic file is provided to the remote computer on the rear side of a computer network interface via the network interface 150. Therefore, letters and pictures written on the screen A 201, the screen B 202, and the screen C 203 can be used as conference minutes.

The image itself imaged (e.g., captured) by the camera 106 is distorted if the camera 106 and the front surface 2011 of the screen A 201 have a relative angle. However, it is possible to make the image corrected by the CPU 120 based on an angular disposition of the screen A 201 which is detected by the angle sensor 231. The electronic file stored in the RAM 131 may be a corrected image.

The projector 105 projects an image onto both or one of the front surface 2011 of the screen A 201 and the rear surface 2032 of the screen C 203 facing the conference space on the rear side of FIG. 5 from the inner periphery of the circular ring of the ring unit 100.

The projected image is an image based on information stored in the RAM 131 or an image based on information transmitted from the remote computer across the computer network interface via the network interface 150. In addition, an image, which is obtained by overlapping an image obtained by being imaged (e.g., captured) by the camera 106 on such an image, can be projected.

A relative position between the surfaces of the screen A 201, the screen B 202, and the screen C 203, and a position designation object such as the finger, a pointing rod, or a laser pointer light may be detected from an image that is imaged (e.g., captured) by the camera 106. The projector 105 may project an image in which a pointer object is overlaid on a position in the projected image corresponding to the detected relative position.

The image projected by the projector 105 may be scaled up or down, or moved in accordance with a change in the detected relative position.

The image projected by the projector 105 may be distorted if the projector 105 and the front surface 2011 (shown in Figure 3) of the screen A 201 have a relative angle. However, when an image corrected by the CPU 120 is projected on the projector based on the angular disposition of the screen A 201 detected by the angle sensor 231 and a person views the image projected on the front surface 2011 (shown in Figure 3) of the screen A 201, the distortion can be in a reduced state.

It is also possible to provide a plurality of cameras 106 on the inner periphery of the circular ring of the ring unit 100 so that the cameras 106 can be simultaneously used in each conference space.

The camera 106 is movably installed on the inner periphery of the circular ring of the ring unit 100 in a circumferential direction so that the camera 106 can be used with flexibility in each conference space.

A plurality of projectors 105 are installed on the inner periphery of the circular ring of the ring unit 100 so that the projectors 105 can be simultaneously used in each conference space.

The projector 105 is movably installed on the inner periphery of the circular ring of the ring unit 100 in the circumferential direction so that the projector 105 can be used with flexibility in each conference space.

The ring unit 100 is rotatably supported around the rotation post 210 so that the projector 105 or the camera 106 can be used with flexibility in each conference space.

It is possible to switch the image by specifying which surface of which screen which the projector 105 faces and on which an image is projected based on the angular disposition detected by the angle sensors 231, 232, and 233.

For example, if a surface facing the projector 105 opens to be outside the angle range of the conference space that is currently used or that has a schedule to be used in future displayed by the ring display 104, a sign "please narrow the angle of the screen" can be overlaid to the image projected by the projector 105.

For example, when the time scheduled to be used as displayed on the ring display 104 of the surface facing the projector 105 has passed, a sign "end time has passed" can be overlaid to the image projected by the projector 105.

For example, if an image is being displayed over a predetermined angle range set by a user, onto a surface facing the projector 105, and the angle range is exceeded while displaying the image, it is possible to cause the image not to be projected.

The surface of which an image is imaged (e.g., captured) by the camera 106 is specified as which surface of which screen based on the angular disposition detected by the angle sensors 231, 232, and 233. It is possible to switch processing to be applied to the electronic file of the image that can be imaged (e.g., captured) by the camera 106.

For example, if the surface facing the camera 106 is a surface within the angle range of the conference space that is currently used or that has a schedule to be used in future displayed by the ring display 104, it is possible to include information on the use time zone and the user name in the name of the electronic file, or to transmit the electronic file to the remote computer having a user's account.

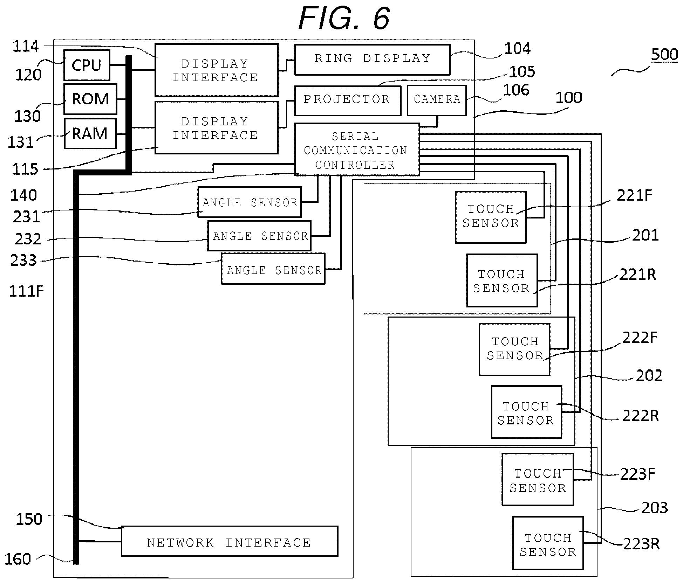

FIG. 6 is a block diagram of a system of a partition system 500 according to an embodiment.

A touch sensor may be disposed on each of front and rear surfaces of each of a screen A 201, a screen B 202, and a screen C 203. That is, the screen A 201 may include a touch sensor 221F that detects a relative touch position of a front surface 2011 (shown in Figure 3) and a touch sensor 221R that detects a relative touch position of a rear surface 2012 (shown in Figure 3).

The screen B 202 may include a touch sensor 222F that detects a relative touch position of a front surface 2021 (shown in Figure 3) and a touch sensor 222R that detects a relative touch position of a rear surface 2022 (shown in Figure 3).

The screen C 203 may include a touch sensor 223F that detects a relative touch position of a front surface 2031 (shown in Figure 3) and a touch sensor 223R that detects a relative touch position of a rear surface 2032 (shown in Figure 3).

Information of the relative touch position of the touch sensor 221F with respect to the front surface 2011 (shown in Figure 3) of the screen A 201 input from the touch sensor 221F of the screen A 201 is supplied to a CPU 120 via a serial communication controller 140.

Information of the relative touch position of the touch sensor 221R with respect to the rear surface 2012 (shown in Figure 3) of the screen A 201 input from the touch sensor 221R of the screen A 201 is supplied to the CPU 120 via the serial communication controller 140.

Information of the relative touch position of the touch sensor 222F with respect to the front surface 2021 (shown in Figure 3) of the screen B 202 input from the touch sensor 222F of the screen B 202 is supplied to the CPU 120 via the serial communication controller 140.

Information of the relative touch position of the touch sensor 222R with respect to the rear surface 2022 (shown in Figure 3) of the screen B 202 input from the touch sensor 222R of the screen B 202 is supplied to the CPU 120 via the serial communication controller 140.

Information of the relative touch position of the touch sensor 223F with respect to the front surface 2031 (shown in Figure 3) of the screen C 203 input from the touch sensor 223F of the screen C 203 is supplied to the CPU 120 via the serial communication controller 140.

Information of the relative touch position of the touch sensor 223R with respect to the rear surface 2032 (shown in Figure 3) of the screen C 203 input from the touch sensor 223R of the screen C 203 is supplied to the CPU 120 via the serial communication controller 140.

A projector 105 may project an image overlaid with a pointer object at a position corresponding to a relative position provided by each touch sensor 221F, 221R, 222F, 222R, 223F, 223R among images projected on the surfaces of the screen A 201, the screen B 202, and the screen C 203.

The image projected by the projector 105 may be scaled up or down, or moved in accordance with a change in the relative position provided by each touch sensor.

In addition, information of the relative position provided by each touch sensor may be supplied to a remote computer across a computer network interface via a network interface 150. The information of the relative position supplied by each touch sensor is provided to the remote computer and an image is projected by the projector 105. Therefore, it is possible to make the partition system 500 function as a so-called thin client.

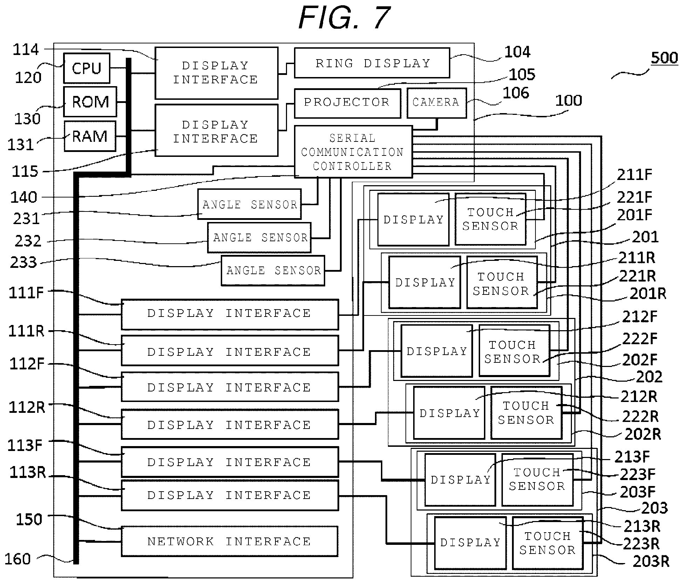

FIG. 7 is a block diagram of a system of a partition system 500 according to another embodiment.

A screen A 201 may include a display 211F that emits light in a direction toward a front surface 2011 (shown in Figure 3) and a display 211R that emits light in a direction toward a rear surface 2012 (shown in Figure 3), and an image may be displayed on each of a front surface 2011 side (shown in Figure 3) and a rear surface 2012 side (shown in Figure 3).

A screen B 202 may include a display 212F that emits light in a direction toward a front surface 2021 (shown in Figure 3) and a display 212R that emits light in a direction toward a rear surface 2022 (shown in Figure 3), and an image may be displayed on each of a front surface 2021 side (shown in Figure 3) and a rear surface 2022 side (shown in Figure 3).

A screen C 203 may include a display 213F that emits light in a direction toward a front surface 2031 (shown in Figure 3) and a display 213R that emits light in a direction toward a rear surface 2032 (shown in Figure 3), and an image may be displayed on each of a front surface 2031 side (shown in Figure 3) and a rear surface 2032 side (shown in Figure 3).

The display 211F and the touch sensor 221F configure a touch panel 201F.

The display 211R and the touch sensor 221R configure a touch panel 201R.

The display 212F and the touch sensor 222F configure a touch panel 202F.

The display 212R and the touch sensor 222R configure a touch panel 202R.

The display 213F and the touch sensor 223F configure a touch panel 203F.

The display 213R and the touch sensor 223R configure a touch panel 203R.

A display interface 111F controls the display of the display 211F. Information of an image displayed on the display 211F is stored in a video memory of the display interface 111F. The information of the image displayed on the display 211F may be stored in a RAM 131.

The display interface 111F communicates with a CPU 120 via a bus 160.

A display interface 111R controls the display of the display 211R. Information of an image displayed on the display 211R is stored in a video memory of the display interface 111R. The information of the image displayed on the display 211R may be stored in the RAM 131.

The display interface 111R communicates with the CPU 120 via the bus 160.

A display interface 112F controls the display of the display 212F. Information of an image displayed on the display 212F is stored in a video memory of the display interface 112F. The information of the image displayed on the display 212F may be stored in the RAM 131.

The display interface 112F communicates with the CPU 120 via the bus 160.

A display interface 112R controls the display of the display 212R. Information of an image displayed on the display 212R is stored in a video memory of the display interface 112R. The information of the image displayed on the display 212R may be stored in the RAM 131.

The display interface 112R communicates with the CPU 120 via the bus 160.

The display interface 113F controls the display of the display 213F. Information of an image displayed on the display 213F is stored in a video memory of the display interface 113F. The information of the image displayed on the display 213F may be stored in the RAM 131.

The display interface 113F communicates with the CPU 120 via the bus 160.

The display interface 113R controls the display of the display 213R. Information of an image displayed on the display 213R is stored in a video memory of the display interface 113R. The information of the image displayed on the display 213R may be stored in the RAM 131.

The display interface 113R communicates with the CPU 120 via the bus 160.

Each surface of the screen A 201, the screen B 202, and the screen C 203 may be used as a pair of displays or as a single continuous display.

For example, the display 211F of the front surface 2011 of the screen A 201 and the display 213R of the rear surface 2032 of the screen C 203 facing the conference space on the rear side of FIG. 5 may be used as two-screen and two-workspace as each desktop of two instances of an operating system.

For example, the display 211F of the front surface 2011 of the screen A 201 and the display 213R of the rear surface 2032 of the screen C 203 facing the conference space on the rear side of FIG. 5 may be used as two-screen and one-workspace with an extended desktop function of one instance of the operating system.

For example, the display 211F of the front surface 2011 of the screen A 201 and the display 213R of the rear surface 2032 of the screen C 203 facing the conference space on the rear side of FIG. 5 may be used as one-screen and one-workspace as a desktop of one instance of the operating system.

It is possible to switch an image displayed on each display based on the angular disposition detected by the angle sensors 231, 232, and 233.

For example, when the time scheduled to be used displayed on the ring display 104 has passed, an image, which is obtained by overlapping a sign "end time has passed" to the display in the angle range of the conference space that is currently used or that has a schedule to be used in future, can be displayed.

For example, switching can be performed such that an image, which is set in advance by a user of the angle range of the conference space that is currently used or that has a schedule to be used in future displayed by the ring display 104, is displayed on a display in the angle range. Or, if the angle of the screen is rotated and then comes out of the angle range, the image is not displayed on the display.

If the angular disposition of the front surface 2011 (shown in Figure 3) of the screen A 201 and the rear surface 2032 (shown in Figure 3) of the screen C 203 is parallel, the images of the display 211F and the display 213R are displayed as a continuous single screen, and if the angular disposition is not parallel, the images of the display 211F and the display 213R may be independently displayed as two screens which are respectively independent.

In each embodiment, programs for realizing the functions of the exemplary embodiment are recorded in advance on the ROM or the RAM that is a program storage unit on the inside of the apparatus, but the configuration is not limited to such an embodiment. A similar program may be downloaded from the computer network to the apparatus. Alternatively, a similar program stored in a recording medium may be installed in the apparatus. The recording medium may be in any form, such as a CD ROM or a memory card, as long as the recording medium can store a program and is readable by the apparatus. In addition, a function obtained by installing or downloading program may be one which realizes the function in cooperation with the firmware, the operating system, or the like of the inside of the apparatus.

While certain embodiments have been described, these embodiments have been presented by way of example only, and are not intended to limit the scope of the inventions. Indeed, the novel embodiments described herein may be embodied in a variety of other forms; furthermore, various omissions, substitutions and changes in the form of the embodiments described herein may be made without departing from the framework of the inventions. The accompanying claims and their equivalents are intended to cover such forms or modifications as would fall within the scope of the inventions.

## Claims

1. A partition system comprising:
a first screen (201);
a post (101) that rotatably supports the first screen around a vertical axis line; and
a second screen (202) that is rotatably supported by the post around the vertical axis line.

2. The partition system according to claim 1, further comprising:
a third screen (203) that is rotatably supported by the post around the vertical axis line.

3. The partition system according to claim 2, further comprising:
a circular ring (100) disposed around the post (101), wherein the center of the circle is coaxial with the vertical axis line.

4. The partition system according to claim 3, the circular ring comprising a ring display (104) configured to display an image on a radially outward surface of the circular ring.
wherein the ring display includes a camera that images the first screen.

5. The partition system according to claim 4,
wherein the ring display (104) includes a projector that projects an image on the first screen.

6. The partition system according to any one of claims 2 to 5, further comprising:
one or more projectors for projecting images onto each of the first screen, the second screen, and the third screen.

7. The partition system according to any one of claims 1 to 6, wherein each of the first screen, the second screen, and the third screen includes a touch sensor on respective front and rear surfaces thereof.

8. The partition system according to any one of claims 1 to 7, further comprising:
a plurality of angle sensors (231) for determining angular positions of each of screens.

9. The partition system according to claim 8, wherein the angle sensor (231) is configured to detect an angular position in a coordinate system with the center of the circle.

10. The partition system of claim 8 or 9, wherein relative angles between the first screen, the second screen, and the third screen is adjustable.

11. The partition system according to any one of claims 6 to 10,
wherein the images projected onto the first screen, the second screen, and the third screen are adjusted in response to angular positions of the first screen, the second screen, and the third screen.
